(19) Europäisches Patentamt

European Patent Office

Office européen des brevets

(11) **EP 0 741 477 A1**

(12) # DEMANDE DE BREVET EUROPEEN

(43) Date de publication:
06.11.1996 Bulletin 1996/45

(51) Int Cl.$^6$: **H04L 27/06**

(21) Numéro de dépôt: 96400877.5

(22) Date de dépôt: 24.04.1996

(84) Etats contractants désignés:
**DE FR GB IT**

(30) Priorité: **28.04.1995 FR 9505115**

(71) Demandeur: **THOMSON multimedia**
**92400 Courbevoie (FR)**

(72) Inventeurs:
• **Boie, Werner**
**92050 Paris la Defense Cedex 60 (FR)**

• **Sonrier, Michel**
**92050 Paris la Defense Cedex 60 (FR)**

(74) Mandataire: **Ruellan-Lemonnier, Brigitte et al**
**THOMSON Multimedia,**
**9 Place des Vosges**
**La Défense 5**
**92050 Paris La Défense (FR)**

(54) **Filtrage numérique de phase**

(57) L'invention concerne un système de filtrage numérique adapté au filtrage numérique d'un signal :

- un premier circuit (A1) calcule l'accroissement moyen d'amplitude ( $\Delta X_{moy}(n)$) entre deux échantillons (Xn) ;

- un deuxième circuit (A2) de signal de sortie (Yn) effectue une moyenne pondérée par un coefficient ($\alpha$) entre l'échantillon à filtrer (Xn) et l'échantillon précédent (Yn-1) augmenté algébriquement par l'accroissement moyen d'amplitude ($\Delta x_{moy}$ (n)).

Applications : Transmission de signaux numériques

FIG. 5

**Description**

L'invention concerne un système de filtrage numérique d'un signal et plus particulièrement un système numérique adapté au filtrage numérique d'un signal monotone croissant (ou décroissant). Le signal est physiquement représenté par une suite d'échantillons prenant des valeurs finies codées sur N bits. Selon une application préférée, le signal à filtrer présente des discontinuités modulo $2^N$ dans sa représentation numérique.

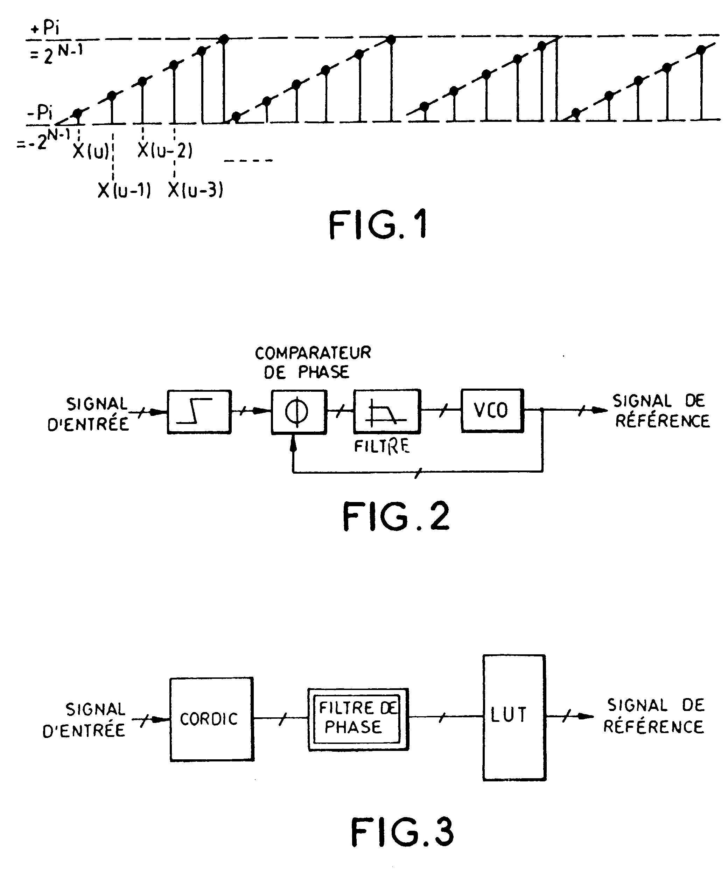

Notamment, l'invention apporte une solution pour le filtrage de la phase instantanée d'un signal, quand celle-ci peut se construire comme un signal variant alors modulo $2\pi$ entre deux valeurs $-\pi$ et $+\pi$ codées sur N bits comme cela est représenté en figure 1.

Cette opération de filtrage peut être rendue nécessaire dans des systèmes où l'information de phase d'un signal émis doit être restituée à la réception, débarrassée des perturbations engendrées lors de sa transmission ou liées à la nature de la modulation.

Ce peut être le cas en particulier des signaux de transmission vidéo terrestre.

L'enjeu, en vue dune démodulation synchrone, consistant à reconstruire à partir de la porteuse à la fréquence intermédiaire du signal reçu, un signal de référence en phase et à la fréquence de cette même porteuse.

Outre les perturbations possibles à la transmission, la nature "Bande Latérale Résiduelle" de la modulation vidéo entraîne intrinsèquement une modulation de phase de la porteuse pour les hautes fréquences du signal modulant.

La restitution de cette porteuse (en numérique ou en analogique) s'effectue généralement à l'aide d'une "boucle de verrouillage de phase" ou PLL (voir figure 2). Le filtrage de la phase s'identifie alors au filtre dans la boucle de phase et au temps de réponse de la boucle elle-même.

Une autre solution à vocation numérique (voir figure 3) peut mettre à profit des algorithmes comme l'algorithme "CORDIC" tel que décrit dans le document "The Cordic Trigonometric Computing Technique" de J.E. VOLDER, IRE Transactions on Electronic Computers, p. 330-334, September 1959, capables de délivrer une information du type de la figure 1 sur la phase instantanée du signal reçu.

Cette information après filtrage peut s'utiliser directement à l'entrée d'une table mémoire préenregistrée du type "Look-Up Table" pour générer les valeurs numériques du signal de référence ainsi reconstitué.

Le procédé décrit par l'invention offre une solution pour le filtrage.

L'invention concerne donc un système de filtrage numérique d'un signal, caractérisé en ce qu'il comporte :

- un circuit de calcul de l'accroissement moyen damplitude entre deux échantillons ;
- un circuit de signal de sortie effectuant une moyenne pondérée par un coefficient entre l'échantillon à filtrer et l'échantillon précédent augmenté algébriquement par l'accroissement moyen d'amplitude.

Lorsque le signal présente des discontinuités périodiques, le système de l'invention comporte un circuit de comparaison de deux échantillons successifs, et un circuit de correction de discontinuité fonctionnant lorsque le circuit de comparaison détecte une discontinuité entre deux échantillons.

Plus particulièrement, dans les circuits de l'invention :

. le circuit de calcul d'accroissement moyen comporte :

   - un circuit de calcul de la différence de deux échantillons successifs ;
   - un premier circuit d'addition de l'accroissement moyen calculé antérieurement et de la variation de l'accroissement pondéré.

. le circuit de signal de sortie comporte :

   - un deuxième circuit d'addition additionnant l'échantillon calculé antérieurement, la valeur moyenne daccroissement fourni par le circuit de calcul d'accroissement;
   - un troisième circuit d'addition additionnant les valeurs pondérées par un coefficient d'un échantillon et par un coefficient de la valeur estimée d'un échantillon.

Les différents objets et caractéristiques de l'invention apparaîtront plus clairement dans la description qui va suivre et dans les figures annexées qui représentent:

- les figures 1 à 3, des techniques de l'art connu ;
- la figure 4, un schéma explicatif du système de l'invention ;
- la figure 5, un exemple de réalisation simplifié du système de l'invention ;
- la figure 6, un exemple de réalisation plus complet de système de l'invention ;

- la figure 7, un schéma explicatif d'un cas de filtrage particulier selon l'invention.

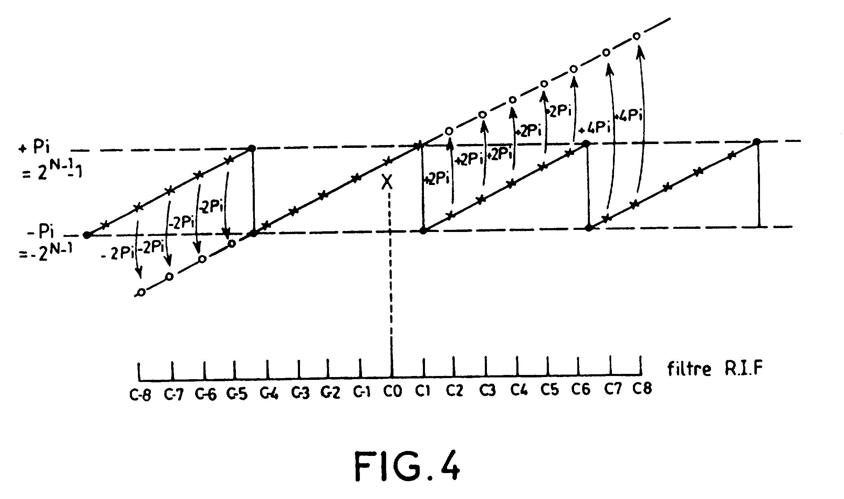

L'idée consiste à gérer de façon dynamique les discontinuités du signal à filtrer de sorte à rendre le signal monotone croissant pour les coefficients d'un filtre qui pourrait être à réponse impulsionnelle finie (RIF) comme le montre la figure 4.

La méthode de traitement pour un échantillon X en cours de calcul est de soustraire aux échantillons situés en amont et d'ajouter aux échantillons situés en aval $k2\pi$ pour k discontinuités rencontrées à partir de X.

Ceci s'accompagne d'un accroissement du nombre de bits nécessaires à la représentation du signal, fonction du nombre d'échantillons par période du signal et de la dimension du filtre. De plus, le nombre de tests peut devenir prohibitif si la dimension du filtre devient importante. Cela est le cas quand une fréquence de coupure très basse et sélective est requise.

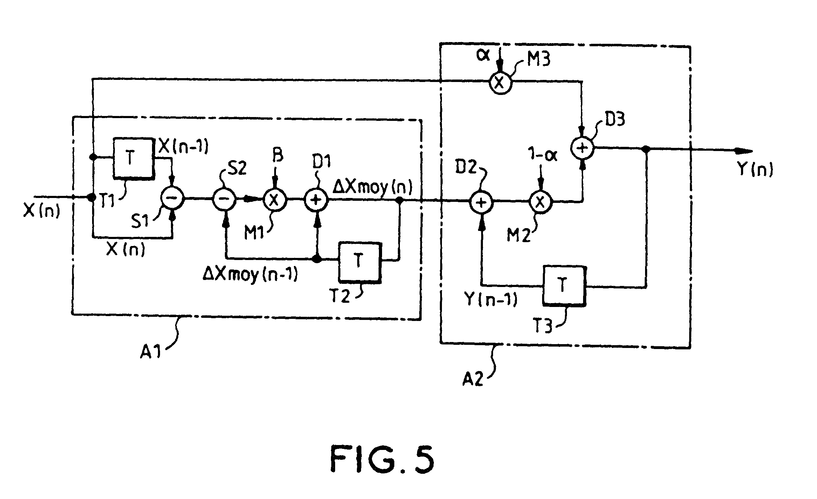

L'invention consiste alors à utiliser un filtre à réponse impulsionnelle infinie (RII) du type de la figure 5.

Le filtre comprend deux parties :

- un premier circuit A1 calcule l'accroissement moyen d'amplitude $\Delta X_{moy}(n)$ entre les échantillons X(n). La valeur moyenne est issue dun filtrage passe-bas RII du type :

$$\Delta X_{moy}(n) = \Delta X_{moy}(n-1) + \beta^*[\Delta X(n) - \Delta X_{moy}(n-1)] \tag{1}$$

où

$$\Delta X(n) = X(n)-X(n-1)$$

- un deuxième circuit A2 calcule l'échantillon de sortie Y(n) du filtre comme une moyenne pondérée par $\alpha$ entre l'échantillon X(n) à filtrer et une estimation $Y_{est}(n)$ de X(n). $Y_{est}(n)$ est calculé à partir de l'échantillon précédent Y(n-1) auquel est ajoutée la valeur moyenne de l'écart entre échantillons $\Delta X_{moy}(n)$ précédemment calculée :

$$Y(n) = \alpha^* X(n) + (1-\alpha)^* Y_{est}(n)$$
$$= Y_{est}(n) + \alpha^*[X(n) - Y_{est}(n)] \tag{2}$$

avec

$$Y_{est}(n) = Y(n-1) + \Delta X_{moy}(n)$$

$\alpha$ et $\beta$ définissent la fréquence de coupure du filtre. Plus $\alpha$ et $\beta$ sont faibles plus la fréquence de coupure est basse.

L'avantage de l'invention est de limiter l'horizon du filtre à 2 échantillons et le nombre de discontinuités à gérer à au plus une.

Le circuit A1 de la figure 5 comporte un circuit à retard T1 induisant à retard T correspondant au temps séparant deux échantillons à traiter et un circuit de soustraction S1 soustrayant deux échantillons consécutifs de façon à obtenir la valeur :

$$\Delta x(n) = X(n) - X(n-1)$$

Un deuxième circuit à retard T2 de retard T fournit à un deuxième circuit de soustraction S2, un écart de valeurs d'échantillons calculé antérieurement $\Delta X_{moy}(n-1)$ qui est soustrait de la valeur $\Delta x(n)$ précédente. Cette différence est affectée du coefficient $\beta$ par le multiplicateur M1. A ce résultat est additionnée (par l'additionneur D1), la valeur $\Delta X_{moy}(n-1)$ antérieure. Le circuit A1 permet ainsi de réaliser l'opération représentée par la formule (1).

Le circuit A2 de la figure 5 possède un circuit à retard T3 (de retard T) et un additionneur D2 permettant d'additionner un échantillon calculé antérieurement Y(n-1) à la différence d'échantillon $\Delta X_{moy}$(n) fournie par le circuit A1. Cette différence est pondérée par le multiplicateur M2, par le coefficient 1-$\alpha$. Ce résultat pondéré est additionné à la valeur de l'échantillon pondéré par le multiplicateur M3 (coefficient de pondération $\alpha$). Ce circuit A2 permet ainsi de réaliser l'opération représentée par la formule (2).

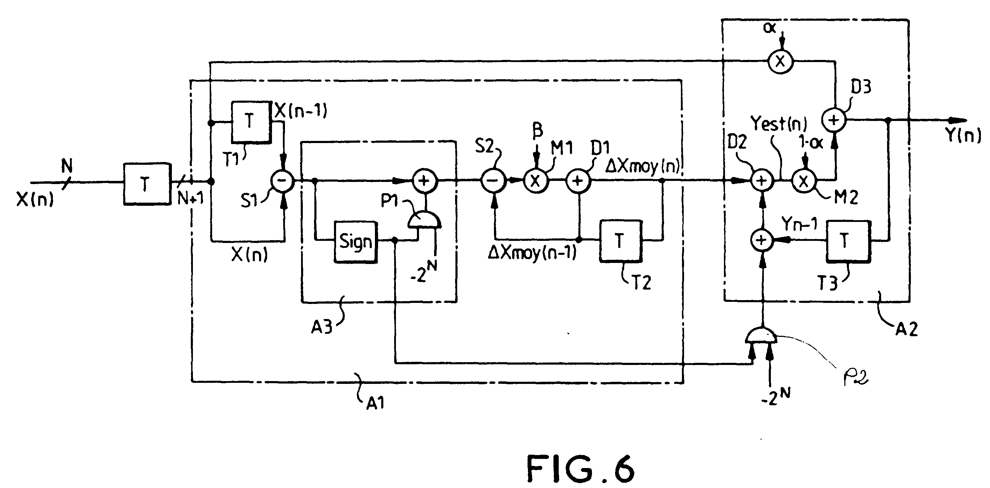

La figure 6 représente une adaptation de la figure 5 de façon à gérer les discontinuités entre deux échantillons.

$$\text{Si } X(n) < X(n-1), \text{ on a alors } X(n-1) = X(n-1)-2^N$$
$$Y(n-1) = Y(n-1)-2^N \qquad (3)$$

Dans ces formules $2^N$ représentent la valeur maximale que peut prendre un échantillon.

Cette opération est gérée par le circuit A3 de la figure 6.

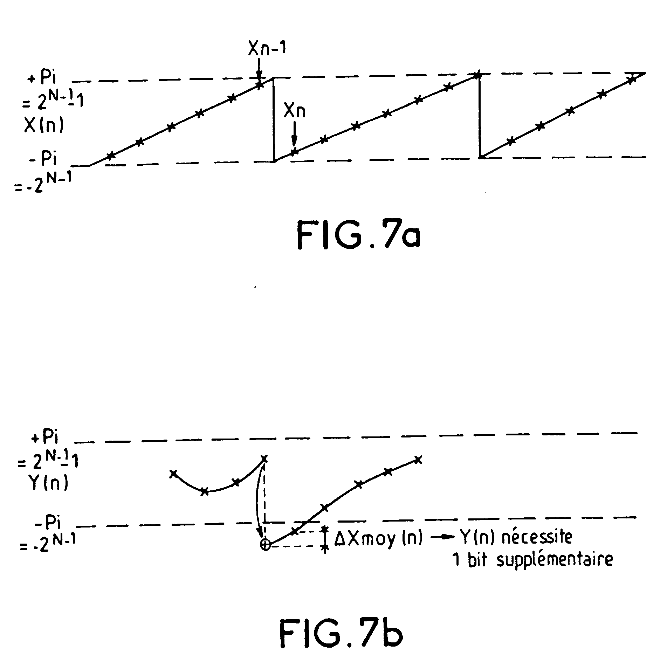

En effet, si les échantillons gérés sont Xn-1 et Xn de la figure 7a, on observe une brusque différence entre les deux échantillons et une différence du siane de leur différence. Le circuit SIGN du circuit A3 de la figure 6 détecte ce signe. Selon la valeur de ce signe il commande les portes P1 et P2 pour commander l'addition (ou la soustraction) de la valeur maximale ($2^N$) que peut prendre un échantillon aux valeurs X(n-1) mesurée et Y(n-1) calculée.

Le circuit A3 permet donc de réaliser les opérations des formules (3).

On note ici que l'opération impose 1 bit supplémentaire à la représentation des échantillons, le résultat pouvant dépasser les limites du cadre défini par la représentation initiale de ces échantillons sur N bits tel que cela est représenté en figure 7b.

Autrement dit, si les échantillons à l'entrée prennent des valeurs dans l'intervalle [$-2^{N-1}$, $+2^{N-1}$], modulo $2^N$, ils devront au moment du filtrage et en sortie du filtrage être représentés sur N+1 bits.

**Revendications**

1. Système de filtrage numérique d'un signal, caractérisé en ce qu'il comporte :

   - un circuit (A1) de calcul de l'accroissement moyen d'amplitude ($\Delta X_{moy}$(n)) entre deux échantillons (Xn) ;
   - un circuit (A2) de signal de sortie (Yn) effectuant une moyenne pondérée par un coefficient ($\alpha$) entre l'échantillon à filtrer (Xn) et l'échantillon précédent (Yn-1) augmenté algébriquement par l'accroissement moyen d'amplitude ($\Delta X_{moy}$ (n)).

2. Système selon la revendication 1, caractérisé en ce que le signal présente des discontinuités périodiques et en ce qu'il comporte un circuit de comparaison (A3) de deux échantillons successifs, et un circuit de correction de discontinuité fonctionnant lorsque le circuit de comparaison détecte une discontinuité entre deux échantillons.

3. Système selon la revendication 2, caractérisé en ce que le circuit de correction ajoute (ou soustrait) aux valeurs d'échantillons traités, la valeur maximale ($2^N$) que peut prendre un échantillon.

4. Système selon la revendication 1, caractérisé en ce que le circuit (A1 ) de calcul d'accroissement moyen comporte :

   - un circuit (T1, S1) de calcul de la différence ($\Delta$Xn) de deux échantillons successifs ;
   - un premier circuit d'addition (S2, M1, D1, T2) de l'accroissement moyen calculé antérieurement ($\Delta X_{moy}$ n-1) et de la variation de l'accroissement pondéré ($\beta[\Delta X(n) - \Delta_{moy}$ n-1].

5. Système selon la revendication 4, caractérisé en ce que le circuit (A2) de signal de sortie comporte :

   - un deuxième circuit d'addition (T3, D2) additionnant à l'échantillon calculé antérieurement (Yn-1), la valeur moyenne d'accroissement ($\Delta X_{moy}$ n) fourni par le circuit A1 de calcul d'accroissement ;
   - un troisième circuit d'addition (D3, M2, M3) additionnant la valeur d'un échantillon (Xn) pondérée par un coefficient $\alpha$ et la valeur estimée ($Y_{est}$n) dun échantillon pondérée par un coefficient (1-$\alpha$).

6. Système selon la revendication 5, caractérisé en ce que le circuit de correction (A3) comporte :

   - un circuit (SIGN) de calcul de signe de différence d'échantillons ;
   - des circuits (P1, P2) de commande daddition (ou de soustraction) d'une valeur maximale d'échantillon ($2^N$)

aux valeurs des signaux traités, fonctionnant sous la commande du circuit (SIGN) de calcul de signe selon la valeur de ce signe.

FIG.1

FIG.2

FIG.3

FIG.4

EP 0 741 477 A1

FIG.5

FIG.6

$+Pi$
$= 2^{N-1}1$
$X(n)$

$Xn-1$

$Xn$

$-Pi$
$= -2^{N-1}$

# FIG.7a

$+Pi$
$= 2^{N-1}1$
$Y(n)$

$-Pi$
$= -2^{N-1}$

$\Delta Xmoy\,(n) \longrightarrow Y(n)$ nécessite
1 bit supplémentaire

# FIG.7b

Office européen
des brevets

**RAPPORT DE RECHERCHE EUROPEENNE**

Numero de la demande

EP 96 40 0877

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 648 037 (THOMSON) 12 Avril 1995<br>* abrégé; figures 2,3,5-8 *<br>* page 4, ligne 54; revendication 50; figure 5 *<br>--- | 1-6 | H04L27/06 |
| A | IEEE TRANSACTIONS ON VEHICULAR TECHNOLOGY, vol. 42, no. 1, Février 1993, NEW YORK US,<br>pages 46-57, XP000363399<br>CHENNAKESHU & SAULNIER: "Differential Detection of pi/4-shifted - DQPSK for digital cellular radio"<br>* abrégé; figure 4 *<br>* page 49, colonne de gauche, alinéa 2 - alinéa 3 *<br>----- | 1-6 | |

**DOMAINES TECHNIQUES RECHERCHES (Int.Cl.6)**

H04L

Le présent rapport a été établi pour toutes les revendications

| Lieu de la recherche | Date d'achèvement de la recherche | Examinateur |
|---|---|---|
| LA HAYE | 29 Août 1996 | Scriven, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P04C02)